# EUROPÄISCHE PATENTSCHRIFT

(11) **EP 1 450 052 B1**
(45) Veröffentlichungstag und Bekanntmachung des Hinweises auf die Patenterteilung: **08.03.2006**
(21) Anmeldenummer: 04001050.6
(22) Anmeldetag: 20.01.2004
(51) Int. Cl.: F16B 12/20

(54) **Beschlag**
Connection fitting
Elément de ferrure

(30) Priorität: 19.02.2003 DE 20302694 U
(43) Veröffentlichungstag der Anmeldung: 25.08.2004
(73) Patentinhaber: Häfele GmbH & Co. KG, 72202 Nagold (DE)
(72) Erfinder: Walz, Rüdiger, 72401 Haigerloch (DE)
(74) Vertreter: Kohler Schmid Möbus

(56) Entgegenhaltungen:
- EP-A- 0 359 317
- EP-A- 0 898 089
- EP-A- 0 949 424
- US-A- 6 142 700
- US-B1- 6 257 796

## Beschreibung

Die Erfindung bezieht sich auf einen Beschlag zur lösbaren Verbindung zweier Platten, insbesondere Möbelplatten, mit einem in einem Gehäuse aus einer Freigabe in eine Sperrstellung drehbaren Spannteil, welches den Kopf eines zugehörigen Anzugsbolzens aufnimmt wie es aus der US 6 142 700 A bekannt ist. Um die Herstellung der Teile und ihre Montage zu vereinfachen, besteht erfindungsgemäß das Gehäuse aus einem Ober- und einem Unterteil, welche rastbar miteinander verbindbar sind, wobei die beiden Teile und das zwischen ihnen angeordnete Spannteil in einem Arbeitsgang über Sollbruchstellen zusammenhängend gefertigt sind. Damit ist, wenn man beispielsweise den Beschlag im Spritzgussverfahren herstellt, nur noch ein einziges Werkzeug erforderlich.

Um die Teile nach der Herstellung leicht zusammensetzen zu können, befindet sich vor der Montage das Spannteil über dem Gehäuseunterteil und das Gehäuseoberteil über dem Spannteil, wobei alle drei Teile jeweils zentrisch zueinander angeordnet sind. Es ist dann nur noch erforderlich, das Gehäuseoberteil auf das Unterteil zu pressen. Dabei wird das Spannteil durch das Gehäuseoberteil mit in das Unterteil gedrückt, worauf dann die Rastverbindung zwischen den beiden Gehäuseteilen erfolgt.

Wenn zusätzlich noch der Anzugsbolzen in einem Arbeitsgang mit den anderen Teilen gefertigt wird und ebenfalls über eine Sollbruchstelle verbunden ist, ergibt sich hierdurch noch eine weitere Verbesserung. In diesem Fall wird der Kopf des Anzugsbolzens vor der Rastverbindung der Gehäuseteile abgetrennt und in das Spannteil eingesetzt, aus welchem das als Schaft ausgebildete freie Ende des Anzugsbolzens dann herausragt.

Bei einer bevorzugten Ausführungsform ist am Gehäuse eine Hülse zur Führung des Anzugsbolzens angeordnet. Der Anzugsbolzen selbst ist an seinem dem Kopf entgegengesetzten Ende seines Schaftes mit ausschwenkbaren Widerhaken versehen, welche mit am freien Ende der Hülse vorgesehenen Auflaufschrägen oder mit einem kegelstumpfförmig ausgebildeten Hülsenende sich spreizend zusammenwirken. Der fertig montierte Beschlag wird dann mit dem Schaft des Anzugsbolzens in die Bohrung der einen und das Gehäuse in die Bohrung einer anderen Platte eingesetzt. Wenn dann das Spannteil zum Anziehen des Anzugsbolzens entsprechend gedreht wird, laufen die ausschwenkbaren Widerhaken am freien Ende der Hülse auf, spreizen sich dabei in der Bohrung der entsprechenden Platte und werden dadurch in dieser festgelegt.

Um die Platten auf einfache Weise wieder voneinander trennen zu können, weist bei einem Beschlag mit einem Anzugsbolzen, dessen Schaft gegenüber dem Kopf im Durchmesser abgesetzt ist, das Spannteil zwei sich etwa gegenüberliegende Spannkurven auf. Dabei liegt das zum Schaft gerichtete Kopfteil des Anzugsbolzens an der Anzugskurve an. Das freie Kopfende befindet sich dagegen an einer Ausstoßkurve. Wenn nunmehr das Spannteil entgegen der Spannrichtung gedreht wird, erfolgt durch die Auastoßkurve eine in die Bohrung gerichtete Rückwärtsverschiebung des Schaftes des Anzugsbolzens. Dabei werden die Widerhaken durch die Bohrungswände in ihre ursprünglich am Schaft anliegende Stellung zurückgeschwenkt, so dass dann der Beschlag mit dem Anzugsbolzen aus der Bohrung herausgenommen werden kann.

Die Zeichnung zeigt Ausführungsbeispiele der Erfindung. Es stellen dar:
- Figur 1: die Ansicht eines dreiteiligen Beschlages vor der Montage,
- Figur 2: eine Darstellung nach Fig. 1 im zusammengerasteten Zustand des Beschlages mit davor liegendem Anzugsbolzen,
- Figur 3: einen Querschnitt durch zwei mittels des Beschlages nach Fign. 1 und 2 verbundene Platten,
- Figur 4: eine Darstellung nach Fig. 1 einer anderen Ausführungsform,
- Figur 5: eine Darstellung nach Fig. 4 mit in das Spannteil eingesetztem Anzugsbolzen,
- Figur 6: eine Darstellung nach Fig. 5 mit zusammengerasteten Gehäuseteilen,
- Figur 7: die Verbindung zweier Platten durch den Beschlag nach Fig. 6 mit nicht angezogenem Anzugsbolzen,
- Figur 8: eine Darstellung nach Fig. 7 mit angezogenem Anzugsbolzen,
- Figur 9: einen Querschnitt nach Fig. 6 mit einem in der Ausgangsstellung befindlichen Spannteil,
- Fign.10 bis 13: Darstellungen nach Fig. 9 in einer 60°-, in einer 90°-, in einer 120°- und in einer 180°-Stellung des Spannteiles.

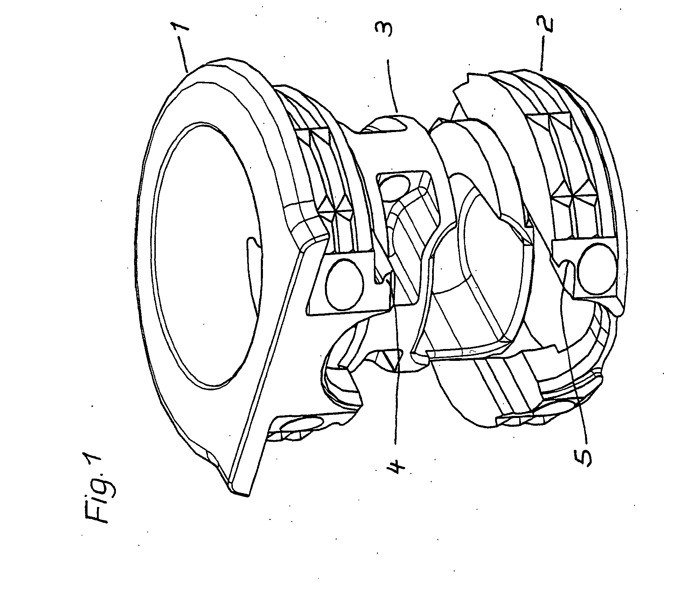

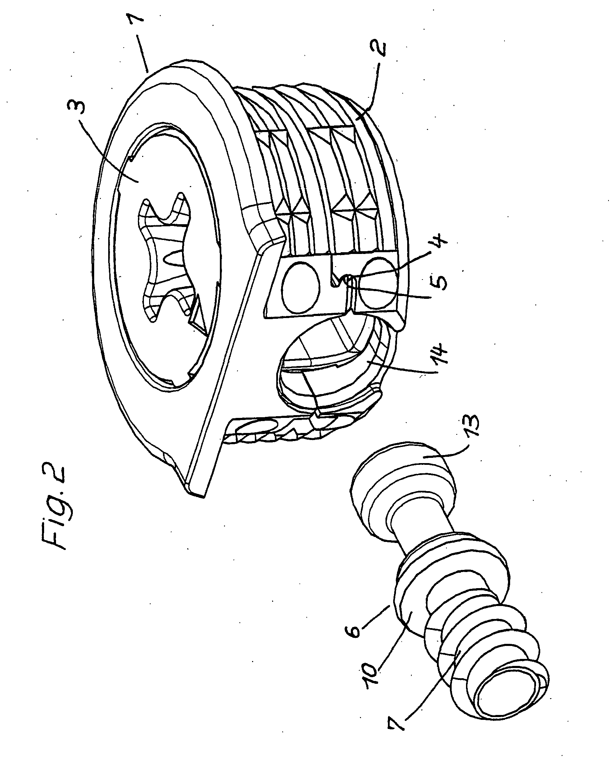

Der Beschlag nach Fig. 1 besteht aus einem Oberteil 1, einem Unterteil 2, und einem Spannteil 3. Diese drei Teile sind zentrisch übereinander angeordnet und durch aus der Zeichnung nicht erkennbare Sollbruchstellen miteinander verbunden. Sobald auf das Gehäuseoberteil 1 Druck ausgeübt wird, schieben sich das Spannteil 3 in und das Gehäuseoberteil 1 auf das Gehäuseunterteil 2, bis die Ansätze 4 des Oberteils 1 in die Ausnehmungen 5 des Unterteils 2 einrasten, wie dies in Fig. 2 dargestellt ist.

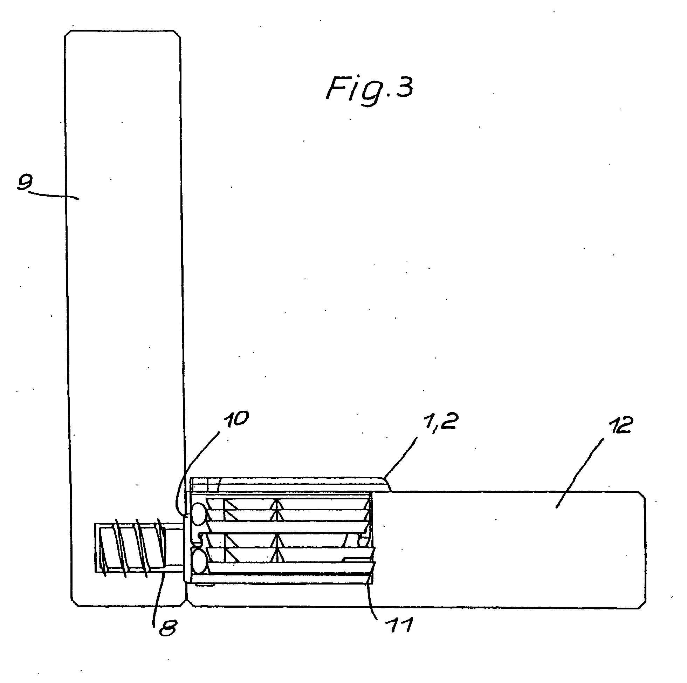

Nach Fig. 3 ist der Anzugsbolzen 6 mit seinem Schaft 7 in die Bohrung 8 einer Platte 9 eingeschraubt, und zwar bis zu dem ringförmigen Flansch 10. Das Gehäuse 1,2 wird dann in die Bohrung 11 der zweiten Platte 12 eingesetzt, worauf die beiden Platten 9 und 12 zusammengedrückt werden. Anschließend wird der Kopf 13 des Anzugsbolzens 6 durch die Öffnung 14 des Gehäuses 1,2 in das Spannteil 3 eingesetzt, worauf dann durch entsprechendes Drehen des Spannteils 3 der Anzugsbolzen 6 angezogen und damit die Platten 9 und 12 fest miteinander verbunden werden.

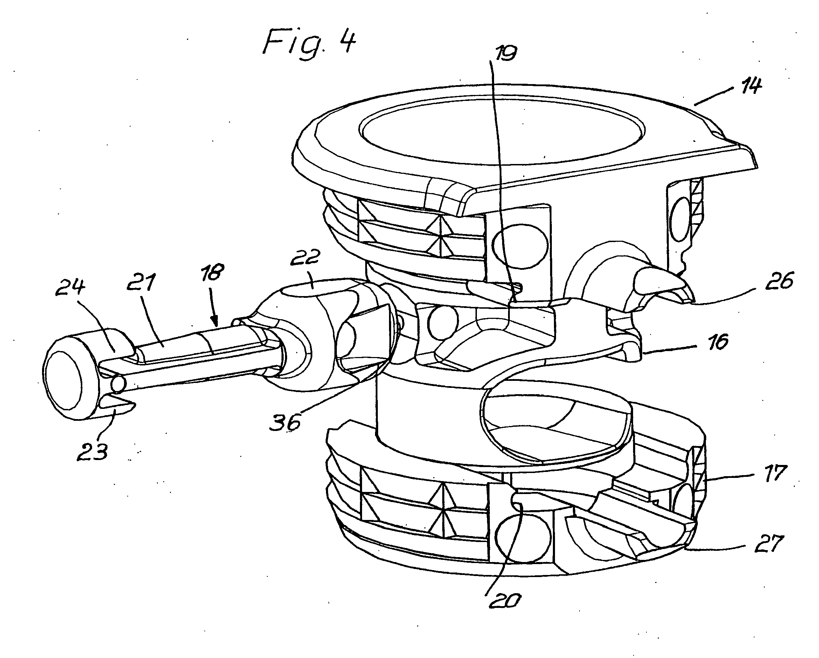

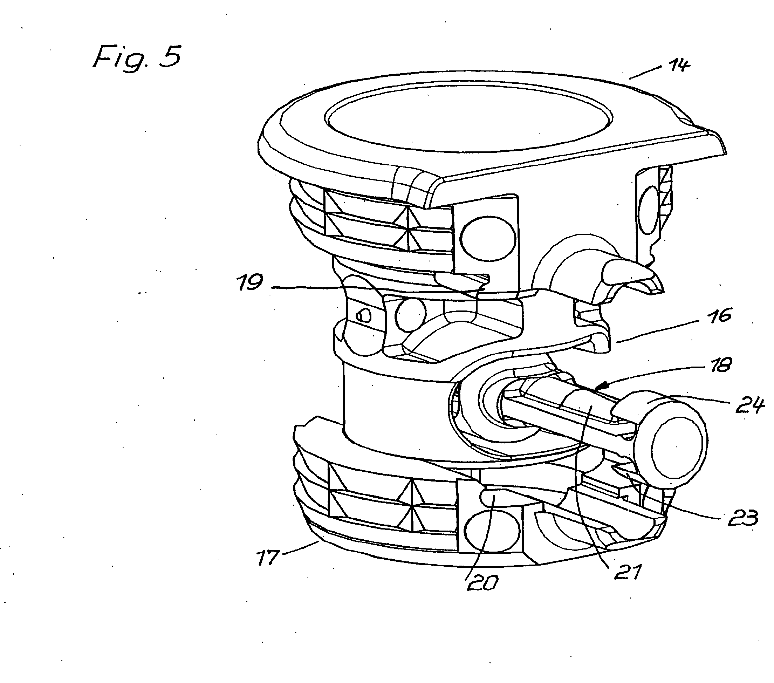

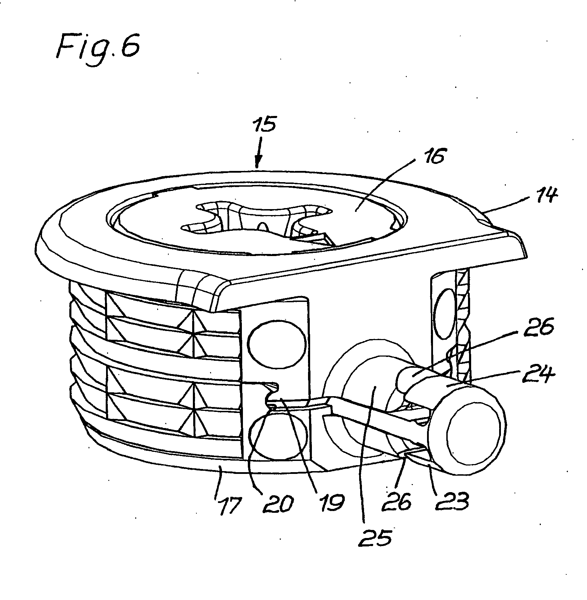

In Fig. 4 ist eine weitere Ausführungsform des erfindungsgemäßen Beschlages dargestellt. Das Gehäuseoberteil 14, das Spannteil 16 und das Gehäuseunterteil 17. liegen zentrisch übereinander und sind durch nicht dargestellte Sollbruchstellen miteinander verbunden. Zusätzlich ist noch ein Anzugsbolzen 18 vorgesehen, welcher über eine Sollbruchstelle 36 mit dem Spannteil 16 verbunden ist. Zur Montage der Teile wird der Anzugsbolzen 18 vom Spannteil 16 gelöst und, wie Fig. 5 zeigt, in dieses eingesetzt. Anschließend erfolgt dann wiederum das Zusammenpressen von Gehäuseoberteil 14 und Gehäuseunterteil 17, bis sich der einsatzbereite Beschlag 15 nach Fig. 6 ergibt. Die Verrastung erfolgt auch hier wiederum durch Ansätze 19 und Rastausnehmungen 20.

Der Anzugsbolzen 18 weist einen Schaft 21 und einen Kopf 22 auf. Am freien Ende sind schwenkbar zwei Widerhaken 23,24 vorgesehen. Das Gehäuse 14, 17 ist mit einer Hülse 25 versehen, welche an ihrem freien Ende zwei sich gegenüberliegende Auflaufschrägen 26 für die Widerhaken 23, 24 aufweist.

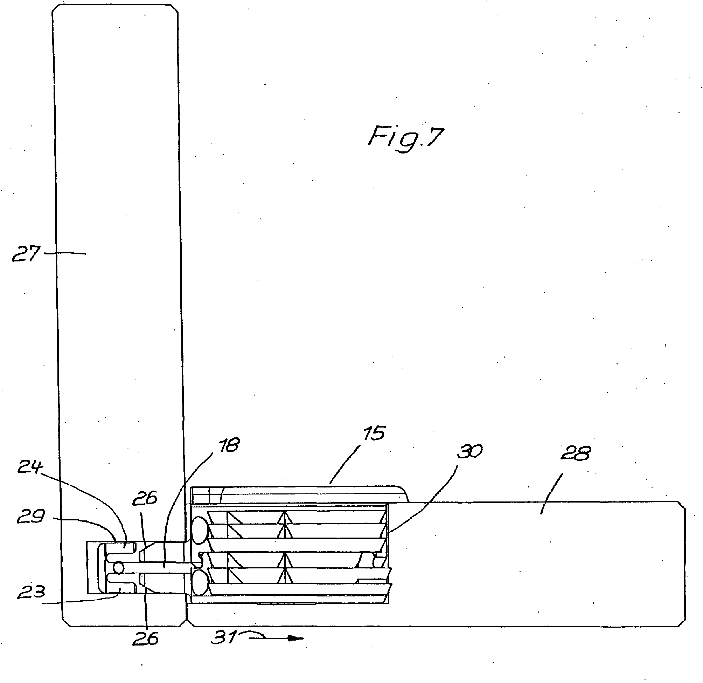

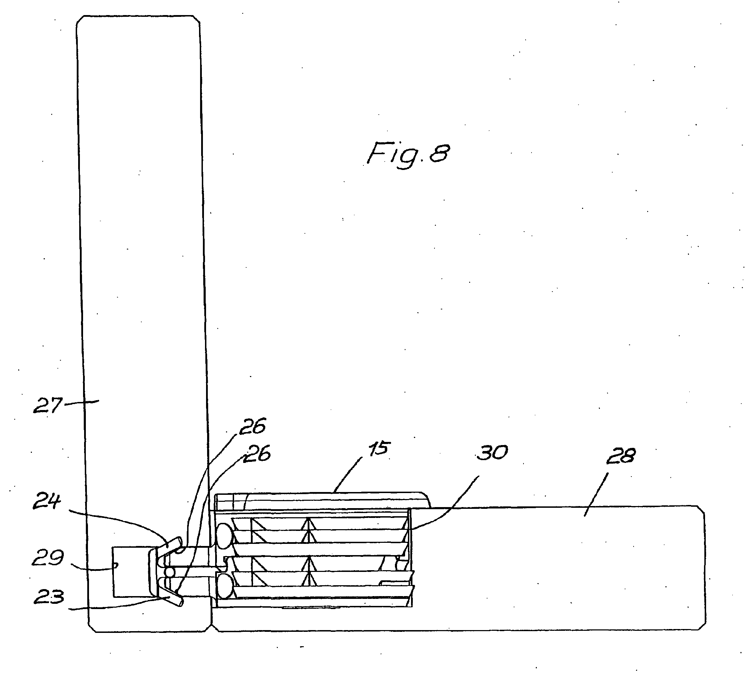

In den Fign. 7 und 8 ist das Zusammenwirken der Widerhaken 23, 24 mit den Auflaufschrägen 26 dargestellt. In der Platte 27 ist eine Bohrung 29 für den Anzugsbolzen 18 und in der Platte 28 eine Ausnehmung 30 für das Gehäuse 15 vorgesehen. Zum Verbinden der beiden Platten 27 und 28 werden zunächst das Gehäuse 15 in die Ausnehmung 30 und anschließend der Anzugsbolzen 18 in die Ausnehmung 29 eingeführt. Beim Drehen des Spannteils 16 wird der Anzugsbolzen 18 in Pfeilrichtung 31 bewegt, wobei die Widerhaken 23 und 24 auf die Auflaufschrägen 26 auflaufen und sich dabei, wie Fig. 8 zeigt, spreizen und in das Material der Platte 27 eingreifen, wodurch sich ein absolut fester Sitz des Anzugsbolzens 18 in der Platte 27 und damit auch eine gute Verbindung beider Platten 27,28 ergibt.

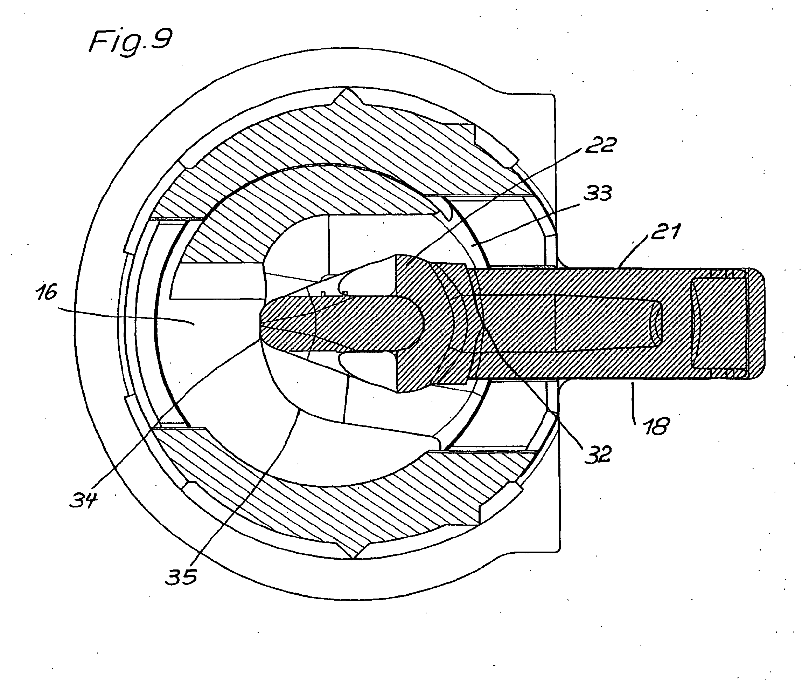

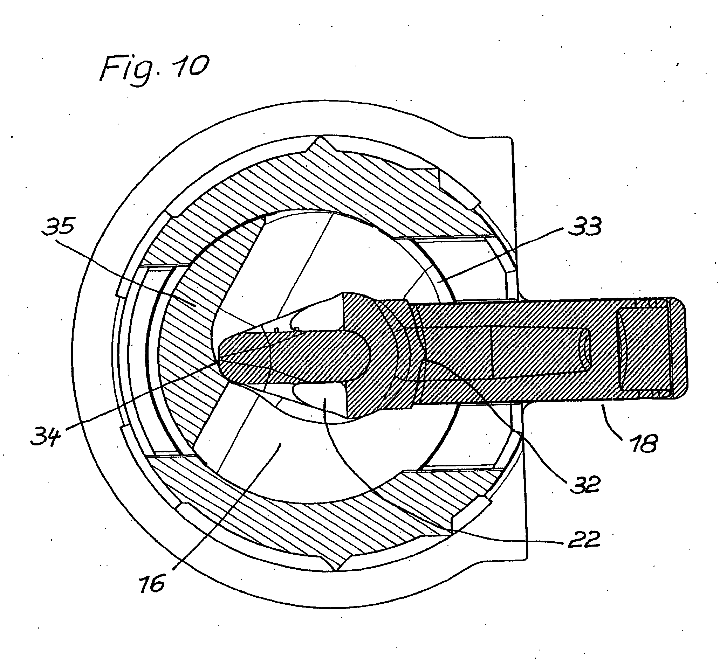

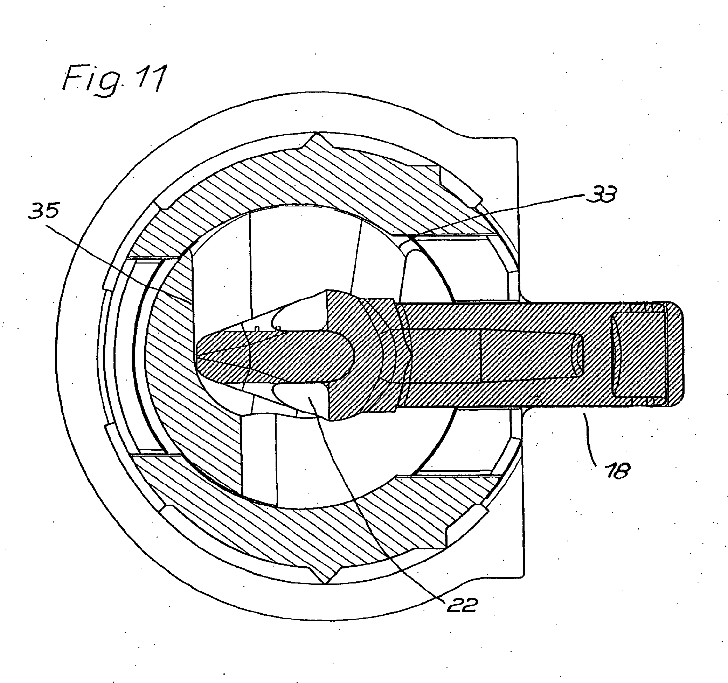

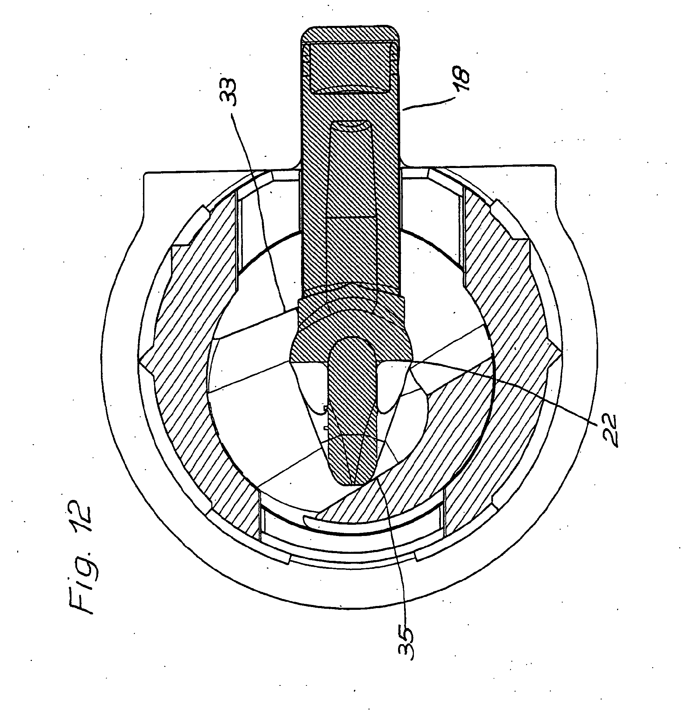

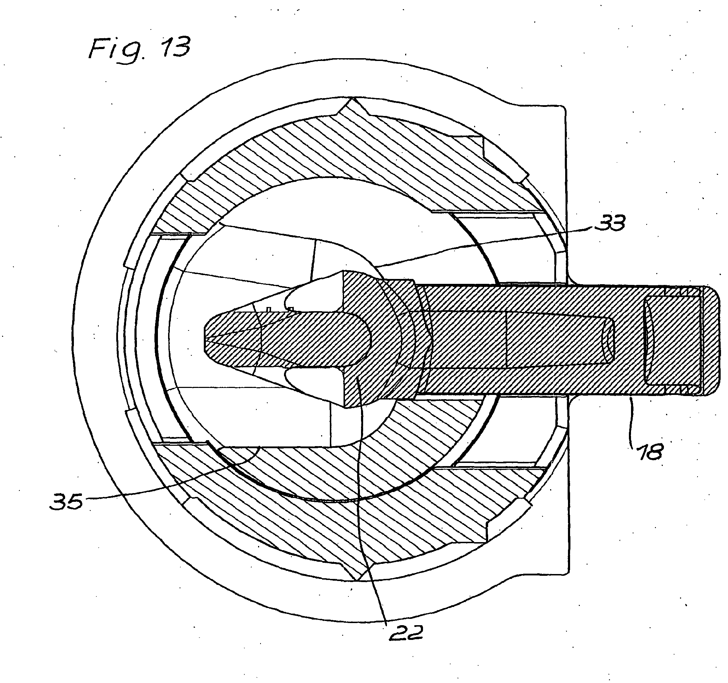

In den Fign. 9 bis 13 sind fünf Stellungen des Spannteils 16 und des Anzugsbolzen 18 zwischen 0° und 180° dargestellt. Dabei stützt sich der zum Schaft 18 gerichtete Kopfteil 32 an der Anzugskurve 33 ab, während das freie Kopfende 34 an der Ausstoßkurve 35 anliegt. Beim Anzug des Anzugsbolzens 18 dreht sich das Spannteil 16 entgegen dem Uhrzeigersinn und zieht den Anzugsbolzen bis in die in Fig. 13 gezeigte Stellung. Bei einer Drehung des Spannteils 16 im Uhrzeigersinn wird der Spannbolzen dagegen durch die Anlage seines freien Kopfendes 14 an der Kurve 35 in seine Ursprungslage nach Fig. 9 zurückbewegt. Dabei rutschen die Widerhaken 23 und 24 von den Auflaufschrägen 26 ab und gehen durch ihre Anlage an den Wänden der Bohrung 29 wieder an ihre Ursprungslage nach Fig. 7 zurück, so dass man dann die Platten 27 und 28 ohne weiteres wieder trennen kann.

## Patentansprüche

1. Beschlag zur lösbaren Verbindung zweier Platten (9,12 u. 27,28), insbesondere Möbelplatten, mit einem in einem Gehäuse (1,2 u.14,17) aus einer Freigabe in eine Sperrstellung drehbaren Spannteil (3,16), welches den Kopf (13,22) eines zugehörigen Anzugsbolzens (6,18) Aufnimmt wobei, das Gehäuse aus einem Ober- (1,15) und einem Unterteil (2,17) besteht, welche rastbar miteinander verbindbar sind, **dadurch gekennzeichnet, dass** die beiden Teile und das zwischen ihnen angeordnete Spannteil (3,16) in einem Arbeitsgang über Sollbruchstellen zusammenhängend gefertigt sind.

2. Beschlag nach Anspruch 1, **dadurch gekennzeichnet, dass** sich vor der Montage das Spannteil (3,16) über dem Gehäuseunterteil (2,17) und das Gehäuseoberteil (1,15) über dem Spannteil jeweils zentrisch zueinander angeordnet befinden.

3. Beschlag nach einem oder beiden der Ansprüche 1 und 2, **dadurch gekennzeichnet, dass** zusammen mit dem Gehäuse (14) und dem Spannteil (16) zusätzlich auch der Anzugsbolzen (18) in einem Arbeitsgang über eine Sollbruchstelle (36) zusammenhängend gefertigt ist.

4. Beschlag nach einem oder mehreren der vorhergehenden Ansprüche, **dadurch gekennzeichnet, dass** vor der Rastverbindung der Gehäuseteile (15,17) der abgetrennte Kopf (22) des Anzugsbolzen (18) im Spannteil liegt, aus welchem das freie Ende seines Schaftes herausragt.

5. Beschlag nach einem oder mehreren der vorhergehenden Ansprüche, **dadurch gekennzeichnet, dass** am Gehäuse (14) eine Hülse (25) zur Führung des Anzugsbolzens (18) angeordnet ist.

6. Beschlag nach Anspruch 5, **dadurch gekennzeichnet, dass** der Anzugsbolzen (18) an seinem dem Kopf (22) entgegengesetzten Ende mit ausschwenkbaren Widerhaken (23,24) versehen ist, welche mit am freien Ende der Hülse (25) vorgesehenen Auflaufschrägen (26) oder mit einem kegelstumpfförmig ausgebildeten Hülsenende sich spreizend zusammenwirken.

7. Beschlag mit einem Anzugsbolzen, bestehend aus einem Schaft (21) mit Kopf (22), wobei der Schaft gegenüber dem Kopf im Durchmesser abgesetzt ist, nach einem oder mehreren der vorhergehenden Ansprüche, **dadurch gekennzeichnet, dass** das Spannteil (16) zwei sich etwa gegenüberliegende Spannkurven aufweist, wobei der zum Schaft (21) gerichtete Kopfteil (32) des Anzugsbolzens (18) an einer Anzugskurve (33) und das freie Kopfende (34) an einer Ausstoßkurve (35) anliegen.

## Claims

1. Fitting for the releasable connection of two panels (9, 12, and 27, 28), in particular furniture panels, which fitting has a clamping member (3, 16) which is rotatable in a housing (1, 2 and 14, 17) out of a release position into a locked position and which receives the head (13, 22) of an associated tightening bolt (6, 18), the housing comprising an upper member (1, 15) and a lower member (2, 17) which can be connected to each other in an engageable manner, **characterised in that** the two members and the clamping member (3, 16) located between them are manufactured in one operation in such a manner that they are joined together by way of predetermined breaking points.

2. Fitting according to claim 1, **characterised in that**, before assembly, the clamping member (3, 16) is located above the lower housing member (2, 17) and the upper housing member (1, 15) is located above the clamping member in such a manner that each member is arranged concentrically with the others.

3. Fitting according to either or both of claims 1 and 2, **characterised in that**, together with the housing (14) and the clamping member (16), the tightening bolt (18) is additionally also manufactured in one operation in such a manner that it is joined by way of a predetermined breaking point (36).

4. Fitting according to one or more of the preceding claims, **characterised in that**, before the engaging connection of the housing members (15, 17), the separated head (22) of the tightening bolt (18) lies in the clamping member from which the free end of the shank thereof projects.

5. Fitting according to one or more of the preceding claims, **characterised in that** a sleeve (25) for guiding the tightening bolt (18) is located on the housing (14).

6. Fitting according to claim 5, **characterised in that** the tightening bolt (18) is provided, at its end opposite the head (22), with barbs (23, 24) which can be pivoted out and which co-operate, in such a manner that they open out, with run-on slopes (26) provided at the free end of the sleeve (25) or with a frustoconical sleeve end.

7. Fitting having a tightening bolt comprising a shank (21) with a head (22), the shank being reduced in diameter relative to the head, according to one or more of the preceding claims, **characterised in that** the clamping member (16) has two clamping cams lying approximately opposite each other, the portion (32) of the head of the tightening bolt (18) that is directed towards the shank (21) abutting a tightening cam (33) and the free end (34) of the head abutting an ejection cam (35).

## Revendications

1. Ferrure pour assembler de façon amovible deux panneaux (9, 12 et 27, 28), notamment des panneaux de meuble, comprenant un élément de fixation (3, 16) pouvant tourner dans un boîtier (1, 2 et 14,17) d'une position de libération à une position de blocage, qui reçoit la tête (13, 22) d'un boulon de serrage (6, 18) associé, le boîtier étant composé d'une partie supérieure (1,15) et d'une partie inférieure (2, 17) pouvant être assemblées par enclenchement, **caractérisée en ce que** les deux parties et l'élément de fixation (3, 16) disposé entre elles peuvent être fabriqués en une seule opération de manière à ce qu'ils soient attachés les uns aux autres par l'intermédiaire de points de rupture.

2. Ferrure selon la revendication 1, **caractérisée en ce qu'**avant le montage, l'élément de fixation (3,16) se situe au-dessus de la partie inférieure (2, 17) du boîtier, et la partie supérieure du boîtier (1, 15) au-dessus de l'élément de fixation, tous les éléments étant centrés les uns par rapport aux autres.

3. Ferrure selon l'une des revendications 1 et 2 ou les deux, **caractérisée en ce que** le boulon de serrage (18) est fabriqué au cours de la même opération que le boîtier (14) et l'élément de fixation (16) en étant également attaché à l'ensemble par le biais d'un point de rupture (36).

4. Ferrure selon l'une ou plusieurs des revendications précédentes, **caractérisée en ce qu'**avant l'assemblage par enclenchement des parties (15, 17) du boîtier, la tête (22) du boulon de serrage (18) détachée est logée dans l'élément de fixation duquel l'extrémité libre de la tige dudit boulon fait saillie.

5. Ferrure selon l'une ou plusieurs des revendications précédentes, **caractérisée en ce qu'**une douille (25) destinée à guider le boulon de serrage (18) est disposée sur le boîtier (14).

6. Ferrure selon la revendication 5, **caractérisée en ce que** le boulon de serrage (18) est muni à son extrémité opposée à la tête (22) de barbes (23, 24) pouvant pivoter, qui, s'écarte, en coopérant avec des rampes (26) prévues à l'extrémité libre de la douille (25) ou avec une extrémité de douille réalisée de façon tronconique.

7. Ferrure dotée d'un boulon de serrage composé d'une tige (21) avec une tête (22), la tige ayant un diamètre inférieur à celui de la tête, selon l'une ou plusieurs des revendications précédentes, **caractérisée en ce que** l'élément de fixation (16) présente deux cames de fixation situées approximativement à l'opposé l'une de l'autre, ia partie de tête (32) du boulon de serrage (18) qui est dirigée vers la tige (21) étant appliquée contre une came de serrage (33) et l'extrémité libre (34) de la tête contre une came d'éjection (35).
